# EUROPÄISCHE PATENTSCHRIFT

(11) **EP 0 822 652 B1**
(45) Veröffentlichungstag und Bekanntmachung des Hinweises auf die Patenterteilung: **24.10.2001**
(21) Anmeldenummer: 97202342.8
(22) Anmeldetag: 25.07.1997
(51) Int. Cl.: H02P 7/00

(54) **Temperaturkompensierte Schaltungsanordnung zur Ansteuerung eines in zwei Richtungen antreibbaren Gleichstrommotors**
Temperature compensated control circuit for driving a DC motor in two directions
Circuit compensé en température pour la commande d'un moteur à courant continu dans deux directions

(30) Priorität: 01.08.1996 DE 19631043
(43) Veröffentlichungstag der Anmeldung: 04.02.1998
(73) Patentinhaber: Philips Corporate Intellectual Property GmbH, 52064 Aachen (DE); Koninklijke Philips Electronics N.V., 5621 BA Eindhoven (NL)
(72) Erfinder: Kaiser, Uwe, c/o Philips Patentverw.GmbH, 22335 Hamburg (DE)
(74) Vertreter: von Laue, Hanns-Ulrich, Dipl.-Ing.

(56) Entgegenhaltungen:
- EP-A- 0 366 521
- EP-A- 0 631 145
- DE-A- 3 446 645
- US-A- 3 731 170
- US-A- 3 851 235
- US-A- 4 020 403
- PATENT ABSTRACTS OF JAPAN vol. 5, no. 7 (E-41) [679] , 17.Januar 1981 & JP 55 136887 A (MATSUSHITA DENKI SANGYO K.K.), 25.Oktober 1980,

## Beschreibung

Die Erfindung betrifft eine Schaltungsanordnung zur Ansteuerung eines in zwei Richtungen antreibbaren Gleichstrommotors, welche Regelmittel mit einem Referenzpotentialeingang und einem Regeleingang aufweist, mittels derer die Drehzahl des Motors regelbar ist, und welche Schaltmittel aufweist, mittels derer für eine erste Laufrichtung des Motors die Regelmittel zur Drehzahlregelung des Motors zuschaltbar sind und mittels derer für eine zweite Laufrichtung des Motors die Regelmittel inaktiv schaltbar sind.

Eine derartige Schaltungsanordnung ist z.B. aus dem Kassettenlaufwerk GR-H der Firma Alpine bekannt. Bei diesem bekannten Kassettenlaufwerk wird der Capstan-Motor in zwei Laufrichtungen betrieben, wobei eine Laufrichtung dem Bandtransport des Magnetbandes dient und die andere Richtung für Servofunktionen genutzt wird. Die Regelmittel sind beispielsweise mittels eines Dreipunkt-Reglers realisiert, der z.B. von der Fa. Matsushita als integrierter Schaltkreis AN6605-N angeboten wird. Für die Laufrichtungsumschaltung wird eine H-Brücke verwendet, wie sie z.B. in dem Buch "Elektrische Kleinmotoren", Helmut Mugschalla, Expert-Verlag, Bild 8.15, gezeigt ist. Bei dieser bekannten Brückenschaltung befindet sich in beiden Laufrichtungen des Motors jeweils ein Transistor zwischen Motor und Versorgungsspannung und ein Transistor zwischen Motor und dem Regeleingang der Regelmittel. Dies hat den Nachteil, daß beispielsweise bei Bipolartransistoren die Kollektor-Emitterspannungen der jeweils durchgeschalteten Transistoren Einfluß auf die Motorspannung und damit auf die Drehzahl haben, da diese Kollektor-Emitterspannungen von den Regelmitteln nicht erfaßt und korrigiert werden können. Diese Kollektor-Emitterspannungen sind sowohl vom Kollektorstrom als auch von der Temperatur abhängig. Ein weiterer Nachteil dieser bekannten Brückenschaltung ist, daß jeweils der Basisstrom des Transistors, der zwischen Motor und dem Regeleingang der Regelmittel geschaltet ist, in den Regeleingang der Regelmittel hinein fließt, aber nicht durch den Motor fließt. Dies hat zur Folge, daß Schwankungen des Basisstromes dieses Transistors auf die Regelmittel einwirken, ohne daß sich der Strom durch den Motor geändert hat.

Eine weitere Schaltungsanordnung ist aus US-A-3,731,170 bekannt. Diese Schaltung steuert einen in zwei Richtungen antreibbaren Gleichstrommotor und enthält Regelmittel zur Drehzahlregelung des Motors und Schaltmittel, um diese Drehzahlregelung zu- oder abzuschalten.

Aus der JP-A-55136887 ist eine Strommess- und Regelschaltung bekannt, welche ein möglichst hohes Anlaufmoment und maximales Drehmoment eines anzusteuernden Elektromotors zu ermöglicht.

Es ist Aufgabe der Erfindung, eine Schaltungsanordnung der eingangs genannten Art zu schaffen, mittels derer eine genauere Drehzahlregelung möglich ist, wobei die Beschaltung des Motors mit möglichst wenig Zuleitungen erfolgen soll.

Diese Aufgabe ist erfindungsgemäß dadurch gelöst, daß als Schaltmittel ein erster, ein zweiter, ein dritter und ein vierter Transistor vorgesehen sind, daß die Regelmittel und der zweite Transistor in das Gehäuse des Motors integriert sind, daß das Gehäuse des Motors drei Verbindungsklemmen für externe Beschaltung aufweist und daß die Regelmittel eine Schaltung zur Temperaturkompensation und zur präzisen Drehzahlregelung des Motors aufweisen.

Der Motor wird in der ersten Laufrichtung mittels der Regelmittel geregelt, während in der anderen Laufrichtung diese Regelmittel abgeschaltet werden und der Motor ungeregelt oder auf andere Weise geregelt betrieben wird. Die Schaltungsanordnung für die Regelung der ersten Laufrichtung ist dadurch optimiert worden, daß die Regelmittel im Gehäuse des Motors untergebracht sind und eine darin integrierte Temperaturkompensationsschaltung, da sie nahe am Motor platziert ist, die temperaturbedingten Drehzahlabweichungen ausregelt. Da sich der Innenwiderstand und der magnetische Fluß des Motors mit der Temperatur ändern, sind die Regelmittel mit in den Motor eingebaut und entsprechend der Motorcharakteristik und der Temperatur kompensiert. Ordnet man nun zusätzlich den zweiten Transistor in dem Motor an, so benötigt der Motor zur externen Spannungsversorgung und Ansteuerung lediglich drei Verbindungen. Die erste Verbindung ist für den ersten elektrischen Anschluß des Motors, die zweite Verbindung für den zweiten elektrischen Anschluß des Motors und die dritte Verbindung für den fünften Transistor erforderlich.

Die Ausgestaltungen nach Anspruch 2 und 3 bieten den Vorteil, daß Regelmittel nur für den Betriebszustand vorgesehen sind, welcher einen besonders genau geregelten Antrieb durch den Motor erfordert. Bei Betrieb des Motors in der ersten Richtung wird dem ersten elektrischen Anschluß des Motors mittels des ersten Transistors das Versorgungsspannungspotential zugeführt. Gleichzeitig ist der erste Anschluß des Motors mittels eines zweiten Transistors mit dem Referenzpotentialeingang der Regelmittel gekoppelt. Bei Betrieb in der ersten Richtung sind der erste und der zweite Transistor durchgeschaltet und der dritte und der vierte Transistor gesperrt, so daß der Referenzpotentialeingang der Regelmittel und der erste elektrische Anschluß des Motors mit Spannung versorgt werden. Zwischen dem ersten elektrischen Anschluß des Motors und dem Referenzpotentialeingang der Regelmittel befindet sich lediglich der durchgeschaltete zweite Transistor, durch den jedoch nicht der Motorstrom, sondern ein im Vergleich zu dem Motorstrom relativ geringer Strom fließt. Daher ist auch die Kollektor-Emitterspannung, die über dem zweiten Transistor bei Betrieb des Motors in der ersten Richtung abfällt, relativ gering.

Andererseits ist bei Betrieb des Motors in der ersten Richtung der zweite elektrische Anschluß Motors mit dem Regeleingang der Regelmittel gekoppelt. Zwischen dem Regeleingang der Regelmittel und dem zweiten elektrischen Anschluß des Motors ist kein Transistor erforderlich, so daß der Motor und der Regeleingang der Regelmittel von demselben Strom durchflossen werden. Es sind keine Transistorbasisströme vorhanden, die in den Regeleingang der Regelmittel hinein fließen, aber nicht durch den Motor fließen.

Für den Betrieb des Motors in der zweiten Richtung ist einerseits der erste elektrische Anschluß des Motors mittels eines dritten Transistors mit einem Bezugspotential gekoppelt und andererseits ist der zweite elektrische Anschluß des Motors mittels eines vierten Transistors mit dem Versorgungsspannungspotential gekoppelt. In der zweiten. Richtung sind der dritte und der vierte Transistor durchgeschaltet und der erste und der zweite Transistor gesperrt. Der Motor wird nun in umgekehrter Richtung mit Spannung versorgt, so daß er in der zweiten Richtung umläuft. Die Regelmittel sind in dieser zweiten Motorrichtung nicht in Betrieb, so daß der Motor in dieser zweiten Richtung ungeregelt betrieben wird. Die Drehzahl des Motors ist in der zweiten Richtung mittels des dritten Transistors einstellbar. Da für die Servofunktionen in einem Magnetbandkassettengerät aber keine hochkonstante Drehzahl erforderlich ist, kann hier eine sehr einfache Schaltung zum Einsatz kommen. In vielen Anwendungsfällen ist es ausreichend, am Motor eine konstante Spannung einzustellen.

Durch die Ausgestaltung nach Anspruch 4 ist es möglich, daß sowohl der Referenzpotentialeingang der Regelmittel als auch der Bezugspotentialeingang der Regelmittel "hochohmig" geschaltet werden können. In der zweiten Motorrichtung wird der zweite elektrische Anschluß des Motors mit dem Versorgungsspannungspotential gespeist. Da der zweite elektrische Anschluß des Motors mit dem Regeleingang der Regelmittel gekoppelt ist, liegt daher in der zweiten Motorrichtung auch der Regeleingang der Regelmittel auf Versorgungsspannungspotential. Um die Regelmittel für die zweite Motorrichtung definiert auszuschalten und in der zweiten Motorrichtung unerwünschte Störfunktionen der Regelmittel zu vermeiden, ist es erforderlich, daß sowohl der Referenzpotentialeingang der Regelmittel als auch der Bezugspotentialeingang der Regelmittel "hochohmig" geschaltet werden. Dies ist insbesondere dann der Fall, wenn die Regelmittel als integrierte Schaltung realisiert sind. Dies wird mittels des fünften Transistors realisiert. In der zweiten Motorrichtung ist der fünfte Transistor gesperrt, wodurch der Bezugspotentialeingang der Regelmittel hochohmig geschaltet wird. In der zweiten Motorrichtung sind der dritte und der vierte Transistor durchgeschaltet. Dadurch sinkt das Potential an dem ersten elektrischen Anschluß des Motors ab, wodurch der mit dem ersten elektrischen Anschluß des Motors gekoppelte zweite Transistor automatisch gesperrt wird. Dadurch wird auch der Referenzpotentialeingang der Regelmittel in der zweiten Motorrichtung hochohmig geschaltet, und die Regelmittel werden wirkungslos. In der ersten Motorrichtung werden der erste und der fünfte Transistor durchgeschaltet und dadurch wird automatisch auch der zweite Transistor durchgeschaltet. Der Bezugspotentialeingang der Regelmittel befindet sich in der ersten Motorrichtung auf Bezugspotential.

Mittels der Ausgestaltung nach Anspruch 5 werden die Transistoren und Regelmittel geschützt.

Nach einer weiteren vorteilhaften Ausgestaltung der Erfindung ist vorgesehen, daß der erste, der dritte, der vierte und der fünfte Transistor in eine integrierte Schaltung integriert sind.

Die erfindungsgemäße Schaltungsanordnung kann besonders gut in eine integrierte Schaltung integriert werden, da beispielsweise bei Bipolartransistoren die Kollektor-Emitterspannungen und die Basisströme des ersten, dritten, vierten und fünften Transistors keinen Einfluß auf die Motorspannung und damit auf die Drehzahlregelung haben. Daher hat es auf die Drehzahlregelung keinen Einfluß, daß es in integrierten Schaltungen in der Regel nicht möglich ist, Transistoren gesättigt zu betreiben und demzufolge die Kollektor-Emitterspannungen deutlich höher sind als bei Einzeltransistoren. Außerdem haben integrierte Transistoren deutlich niedrigere Verstärkungsfaktoren, so daß die Basisströme deutlich höher werden, was bei der erfindungsgemäßen Schaltungsanordnung jedoch auch keinen Einfluß auf die Drehzahlregelung hat. Dadurch, daß der zweite Transistor als Einzeltransistor in den Motor integriert ist, kann dieser gesättigt betrieben werden, und Schwankungen der Kollektor-Emitterspannung dieses zweiten Transistors haben nahezu keinen Einfluß auf die Drehzahlregelung.

Die erfindungsgemäße Schaltungsanordnung kann vorzugsweise in einem Laufwerk bzw. in einem Magnetbandkassettengerät eingesetzt werden. Insbesondere ist es vorteilhaft, mit der erfindungsgemäßen Schaltungsanordnung einen Capstan-Motor anzutreiben, der in einer Laufrichtung dem Bandtransport des Magnetbandes dient und in der anderen Richtung für Servofunktionen genutzt wird. Bei einer solchen Applikation wird eine sehr genaue Geschwindigkeitsregelung in der Regel nur in der Laufrichtung für den Bandtransport benötigt, während für die Servofunktionen eine hochgenaue Geschwindigkeitsregelung nicht erforderlich ist.

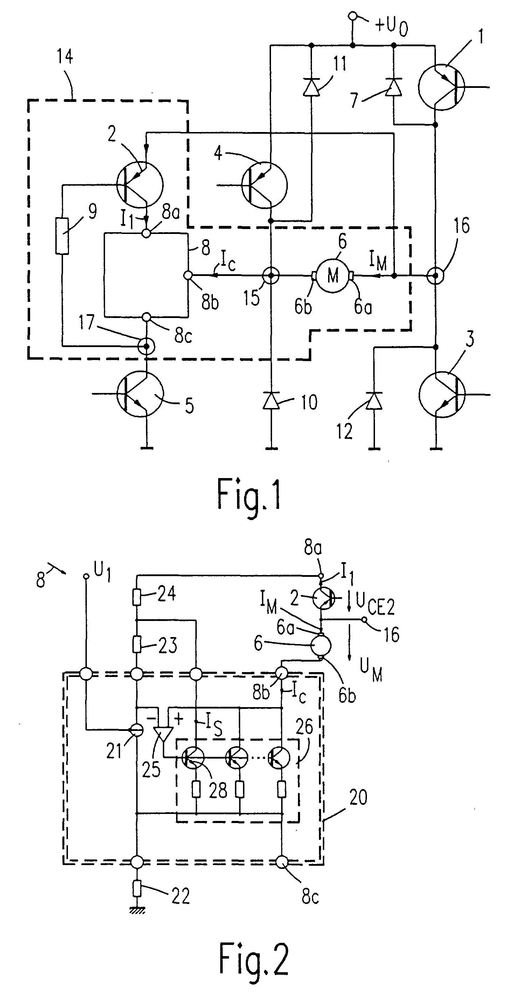

Ein Ausführungsbeispiel der Erfindung wird nachfolgend anhand der Zeichnung in den Fig. 1 und 2 näher erläutert. Es zeigen:
Fig. 1 ein Blockschaltbild einer Schaltungsanordnung zur Ansteuerung eines in zwei Richtungen antreibbaren Gleichstrommotors mit Regelmitteln und fünf Transistoren und
Fig.2 ein Blockschaltbild der Regelmittel gemäß Fig. 1.

Fig. 1 zeigt eine Schaltungsanordnung zur Ansteuerung eines in zwei Richtungen antreibbaren Gleichstrommotors 6. Der Gleichstrommotor 6 weist als ersten elektrischen Anschluß eine erste Potentialklemme 6a und als zweiten elektrischen Anschluß eine zweite Potentialklemme 6b auf. Die erste Potentialklemme 6a ist mit dem Kollektor eines ersten Transistors 1 gekoppelt, dessen Emitter mit einem positiven Versorgungsspannungspotential +U₀ gekoppelt ist. Der Kollektor des Transistors 1 und der Emitter des Transistors 1 sind mittels einer Freilaufdiode 7 gekoppelt. Die erste Potentialklemme 6a des Motors 6 ist mit dem Emitter eines zweiten Transistors 2 gekoppelt, dessen Kollektor mit einem Referenzpotentialeingang 8a eines Regelmittels 8 gekoppelt ist. Die Basis des Transistors 2 ist mittels eines Widerstandes 9 mit dem Kollektor eines fünften Transistors 5 gekoppelt, dessen Emitter mit einem Bezugspotential gekoppelt ist. Der Kollektor des fünften Transistors 5 ist mit einem Bezugspotentialeingang 8c des Steuermittels 8 gekoppelt. Die zweite Potentialklemme 6b des Motors 6 ist mit einem Regeleingang 8b der Regelmittel 8 und mittels einer Freilaufdiode 10 mit Bezugspotential gekoppelt. Ferner ist die zweite Potentialklemme 6b des Motors 6 mit dem Kollektor eines vierten Transistors 4 gekoppelt, dessen Emitter mit dem positiven Versorgungsspannungspotential +U₀ gekoppelt ist. Der Kollektor und der Emitter des Transistors 4 sind mittels einer Freilaufdiode 11 gekoppelt. Die erste Potentialklemme 6a des Motors 6 ist mit dem Kollektor eines dritten Transistors 3 gekoppelt, dessen Emitter mit Bezugspotential gekoppelt ist. Der Kollektor des dritten Transistors 3 ist mittels einer Freilaufdiode 12 mit Bezugspotential gekoppelt. Die Basen des ersten Transistors 1, des dritten Transistors 3 des vierten Transistors 4 und des fünften Transistors 5 sind mittels nicht dargestellter Steuermittel ansteuerbar.

Der Motor 6 ist mittels der erfindungsgemäßen Schaltungsanordnung in einer ersten Richtung geregelt und in einer zweiten Richtung ungeregelt antreibbar. Für die erste geregelte Richtung werden der erste Transistor 1 und der fünfte Transistor 5 durch Ansteuerung der nicht dargestellten Steuermittel durchgeschaltet. Dadurch wird automatisch auch der zweite Transistor 2 durchgeschaltet, und der Referenzpotentialeingang 8a wird mittels des durchgeschalteten zweiten Transistors 2 und mittels des durchgeschalteten ersten Transistors 1 mit dem Versorgungsspannungspotential +U₀ gekoppelt. Der dritte Transistor 3 und der vierte Transistor 4 werden mittels der nicht dargestellten, die Basen der Transistoren 3 und 4 ansteuernden Steuermittel für die erste Motorlaufrichtung gesperrt. Die erste Potentialklemme 6a des Motors 6 erhält in der ersten Motorrichtung mittels des durchgeschalteten ersten Transistors 1 Versorgungsspannungspotential +U₀. Der Einfluß des ersten Transistors 1 und des fünften Transistors 5 auf die Drehzahlregelung bei Betrieb des Motors in der ersten Richtung ist gleich Null. Als einziger Transistor hat der zweite Transistor 2 Einfluß auf die Drehzahlregelung. Da der zweite Transistor 2 aber von einem sehr geringen Kollektorstrom I₁ durchflossen wird, der deutlich geringer ist als der den Motor durchfließende Motorstrom I_{M}, entsteht an dem zweiten Transistor 2 nur eine sehr geringe Kollektor-Emitterspannung. Damit liegen die erste Potentialklemme 6a und der Referenzpotentialeingang 8a der Regelmittel 8, wenn man die sehr geringe Kollektor-Emitterspannung über dem zweiten Transistor 2 vernachlässigt, auf demselben Potential.

Ferner sind bei Betrieb des Motors 6 in der ersten Richtung keine Basisströme vorhanden, die in den Regeleinang 8b der Regelmittel 8 hinein fließen, aber nicht durch den Motor 6 hindurch fließen. Vielmehr werden in der ersten Motorrichtung der Motor 6 und der Regeleingang 8b der Regelmittel 8 von genau demselben Strom durchflossen.

In der zweiten Laufrichtung wird der Motor 6 ungeregelt betrieben, d.h. die Regelmittel 8 werden ausgeschaltet. In der zweiten Laufrichtung, die vorzugsweise für Servofunktionen eines Kassettenlaufwerkes genutzt werden kann, werden der dritte Transistor 3 und der vierte Transistor 4 in Durchlaßrichtung und der erste Transistor 1 und der fünfte Transistor 5 in Sperrichtung betrieben. Dadurch, daß der dritte Transistor 3 durchschaltet, sinkt das Potential an der ersten Potentialklemme 6a des Motors 6 und damit auch am Emitter des zweiten Transistors 2 ab, wodurch der zweite Transistor 2 gesperrt wird und der Referenzpotentialeingang 8a der Regelmittel 8 hochohmig geschaltet wird. Der Motor 6 wird nun in der entgegengesetzten Richtung mit Spannung versorgt, d.h. die zweite Potentialklemme 6b wird über den durchgeschalteten vierten Transistor 4 mit dem Versorgungsspannungspotential +U₀ versorgt, während die erste Potentialklemme 6a über den durchgeschalteten dritten Transistor 3 mit dem Bezugspotential gekoppelt wird. Der Regeleingang 8b der Regelmittel 8 ist daher bei Betrieb des Motors 6 in der zweiten Richtung über den durchgeschalteten vierten Transistor 4 ebenfalls mit dem Bezugspotential U₀ verbunden. Um die Regelmittel 8 für die zweite Motorrichtung definiert auszuschalten und in der zweiten Motorrichtung unerwünschte Störfunktionen der Regelmittel 8 zu vermeiden, wird der fünfte Transistor 5 in Sperrichtung geschaltet, so daß der Bezugspotentialeingang 8c der Steuermittel 8 hochohmig geschaltet wird. Dadurch werden die Regelmittel 8 ausgeschaltet, und es wird vermieden, daß die an dem Regeleingang 8b der Regelmittel 8 anliegende Versorgungsspannung U₀ gegen einen mit Bezugspotential gekoppelten Bezugspotentialeingang 8c geschaltet wird. Dadurch werden unerwünschte Störeffekte vermieden.

Da sich der Innenwiderstand und der magnetische Fluß des Motors mit der Temperatur ändern, werden die Regelmittel 8 in das Gehäuse des Motors 6 mit eingebaut und entsprechend der Motorcharakteristik temperaturkompensiert. Auch der zweite Transistor 2 ist in das Gehäuse des Motors 6 mit eingebaut. Dies ist in Fig. 1 durch die gestrichelte Linie 14 angedeutet. Dies hat den Vorteil, daß der Motor für die externe Beschaltung nur drei Verbindungsklemmen 15, 16 und 17 benötigt. Dies ist fertigungstechnisch besonders günstig, da jede dieser Verbindungsklemmen im Fertigungsprozeß eine oder sogar zwei Handlötstellen bedeutet. Die übrigen Schaltungselemente, d.h. der erste Transistor 1, der dritte Transistor 3, der vierte Transistor 4 und der fünfte Transistor 5 mit den zugeordneten Freilaufdioden 10, 11 und 12 lassen sich vorteilhaft in eine integrierte Schaltung integrieren.

Schwankungen der Kollektor-Emitterspannungen des ersten Transistors 1, des dritten Transistors 3, des vierten Transistors 4 und des fünften Transistors 5 haben keinen Einfluß auf die Motorspannung und damit auf die Drehzahlregelung. Daher ändern sich die Regeleigenschaften der erfindungsgemäßen Schaltungsanordnung durch die obige Integration nicht, obwohl es in integrierten Schaltungen in der Regel nicht möglich ist, die Transistoren gesättigt zu betreiben und demzufolge die Kollektor-Emitterspannungen deutlich höher sind als bei Einzeltransistoren.

Da die Basisströme der Transistoren 1 bis 5 keinen Einfluß auf die Regelung haben, wirkt es sich bei der erfindungsgmäßen Schaltungsanordnung nicht negativ aus, daß integrierte Transistoren deutlich niedrigere Verstärkungsfaktoren haben, infolge derer die Basisströme deutlich höher werden. Der als Einzeltransistor in das Motorgehäuse integrierte zweite Transistor 2 kann gesättigt betrieben werden, wodurch die Kollektor-Emitterspannung über diesem zweiten Transistor 2 nahezu keinen Einfluß auf die Drehzahlregelung hat.

Eine weitere günstige Eigenschaft der Schaltungsanordnung gemäß Fig. 1 ergibt sich daraus, daß die Freilaufdiode 10 auch automatisch die Regelmittel 8 mitschützt und somit keine zusätzliche Freilaufdiode zum Schutz der Regelmittel 8 erforderlich ist.

Ferner ist es vorteilhaft, daß ein Abschalten der Versorgungsspannung +U₀ gleichzeitig auch die Versorgungsspannung der Regelmittel 8 abschaltet.

Fig. 2 zeigt ein prinzipielles Blockschaltbild der Regelmittel 8 gemäß Fig. 1. Dabei weisen die Regelmittel 8 wie in Fig. 1 einen Referenzpotentialeingang 8a, einen Regeleingang 8b sowie einen Bezugspotentialeingang 8c auf. Zwischen dem Referenzpotentialeingang 8a und dem Regeleingang 8b ist aus Fig. 1 nur die Verschaltung mit dem Transistor 2 und dem Motor 6 gezeigt, während die restlichen Elemente aus Fig. 1 der Übersichtlichkeit halber nicht dargestellt sind. Das Steuermittel 8 weist einen integrierten Schaltkreis 20 auf, in den eine Konstant-Stromquelle 21 integriert ist, die von einem Potential U₁ gespeist wird. Das Potential U₁ wird in der Regel gleich dem Potential U₀ aus Fig. 1 sein, wobei dies aber nicht unbedingt erforderlich ist. Die Konstant-Stromquelle 21 ist einerseits über einen Widerstand 22 mit dem Bezugspotential gekoppelt und andererseits über die Serienschaltung eines Widerstandes 23 und eines Widerstandes 24 mit dem Referenzpotentialeingang 8a gekoppelt. Es ist ein Operationsverstärker 25 vorgesehen, dessen invertierender Eingang mit der Stromquelle 21 und dem Widerstand 23 gekoppelt ist und dessen nicht-invertierender Eingang mit dem Regeleingang 8b gekoppelt ist. Ferner ist eine Stromspiegelschaltung 26 vorgesehen, die mit dem Regeleingang 8b, mit dem Ausgang des Operationsverstärkers 25 und mit dem Bezugspotentialeingang 8c gekoppelt ist. Ferner ist die Stromspiegelschaltung 26 mit dem Widerstand 24 und dem Widerstand 23 gekoppelt.

Die Stromspiegelschaltung 26 dient als Stromfühler und besteht aus einer Parallelschaltung von mehreren, nicht näher bezeichneten Transistoren. Die Ströme der Einzeltransistoren der Stromspiegelschaltung 26 stimmen sehr genau überein. Somit ist ein Transistor 28 der Stromspiegelschaltung 26 als Fühler oder Spiegel verwendbar, und der durch den Transistor 28 fließende Spiegelstrom I_{S} stellt einen hochgenauen Bruchteil des Motorstromes I_{M} dar, der identisch dem Strom I_{C} ist, der an dem Regeleingang 8b in die integrierte Schaltung 20 hinein fließt. Muß der Motor 6 nun infolge einer höheren Last ein höheres Drehmoment aufbringen, so steigt der Motorstrom I_{M} und damit auch der Spiegelstrom I_{S} an, wodurch der Spannungsabfall über dem Widerstand 24 erhöht wird und wodurch das Potential an dem invertierenden Eingang des Operationsverstärkers 25 sinkt. Der Operationsverstärker steuert dadurch die Transistoren der Stromspiegelschaltung 26 weiter auf, so daß das Potential an dem Regeleingang 8b sinkt, die Motorspannung U_{M} über dem Motor demzufolge ansteigt und die induzierte Motorspannung, die proportional der Drehzahl ist, konstant bleibt. Dadurch wird die Drehzahl auch bei Laständerungen konstant gehalten. Ändert sich die Spannung an dem Referenzpotentialeingang 8a, so hat dies ebenfalls keinen Einfluß auf die Motordrehzahl, da Spannungsänderungen an dem Referenzpotentialeingang 8a mittels des Operationsverstärkers 25 auf den Regeleingang 8b zurückgekoppelt werden, so daß die Spannungsdifferenz zwischen dem Referenzpotentialeingang 8a und dem Regeleingang 8b von Spannungsschwankungen am Referenzpotentialeingang 8a unberührt bleibt.

Die Regelgenauigkeit der Regelmittel 8 wird entscheidend von zwei Faktoren beeinflußt:
1. Der Motorstrom I_{M}, der durch den Motor fließt, muß genau gleich dem Strom I_{C} sein, der in den Regeleingang 8b hinein fließt. Dies wird durch die erfindungsgemäße Schaltungsanordnung gewährleistet.
2. Das Potential an der ersten Potentialklemme 6a des Motors 6 muß möglichst gleich dem Potential an dem Referenzpotentialeingang 8a der Regelmittel 8 sein. Bei der erfindungsgemäßen Schaltungsanordnung befindet sich zwischen der ersten Potentialklemme 6a des Motors 6 und dem Referenzpotentialeingang 8a lediglich der Transistor 2. Die Kollektor-Emitterspannung U_{CE2}, die über diesem Transistor abfällt, ist bei Betrieb des Motors in der ersten Richtung jedoch sehr gering, und zwar aus zwei Gründen. Einerseits ist der Kollekorstrom I₁, der durch den Transistor 2 hindurch fließt und in den Referenzpotentialeingang 8a hinein fließt, im Vergleich zu dem Motorstrom I_{M} sehr gering und zudem konstanter als der Motorstrom I_{M}. Demzufolge ist auch die Spannung U_{CE2} über dem Transistor 2 infolge des Kollektorstromes I₁ sehr gering und sehr konstant. Als weiterer Punkt kommt hinzu, daß der Transistor 2 bei der erfindungsgemäßen Schaltungsanordnung vorzugsweise als Einzeltransistor realisiert wird, wodurch der Transistor 2 in der Sättigung betrieben werden kann und wodurch ebenfalls ein geringer Spannungsabfall U_{CE2} gewährleistet wird.

Mit der Schaltungsanordnung wird eine Möglichkeit aufgezeigt, einen in zwei Richtungen antreibbaren Gleichstrommotor für diese zwei Richtungen entsprechend anzusteuern, wobei der Motor in einer Richtung mittels Regelmitteln geregelt wird und in der anderen Richtung diese Regelmittel abgeschaltet werden und der Motor ungeregelt oder auf andere Weise geregelt wird. Dadurch wurde erreicht, daß in der ersten geregelten Richtung Schwankungen der Kollektor-Emitterspannungen bzw. Drain-Source-Spannungen der Transistoren dieser erfindungsgemäßen Schaltungsanordnung sowie Schwankungen der Basisströme bzw. Gate-Ströme keinen Einfluß auf die Drehzahlregelung in der ersten geregelten Richtung haben und daher die Regelgenauigkeit gegenüber einer herkömmlichen H-Brücke deutlich erhöht wurde. Dies läßt sich insbesondere vorteilhaft für die Ansteuerung des Capstan-Motors eines Magnetbandkassettengerätes verwenden, da dieser in vielen Applikationen in einer Richtung für den Bandantrieb des Magnetbandes und in der anderen Richtung für Servofunktionen verwendet wird. Für den Bandantrieb ist eine hochgenaue Drehzahlregelung erforderlich, während für die Servofunktionen keine hochgenaue oder nur eine sehr einfache Regelung erforderlich ist.

## Patentansprüche

1. Schaltungsanordnung zur Ansteuerung eines in zwei Richtungen antreibbaren Gleichstrommotors (6), welche Regelmittel (8) mit einem Referenzpotentialeingang (8a) und einem Regeleingang (8b) aufweist, mittels derer die Drehzahl des Motors (6) regelbar ist, und welche Schaltmittel (1, 2, 3, 4) aufweist, mittels derer für eine erste Laufrichtung des Motors (6) die Regelmittel (8) zur Drehzahlregelung des Motors (6) zuschaltbar sind und mittels derer für eine zweite Laufrichtung des Motors die Regelmittel (8) inaktiv schaltbar sind.
**dadurch gekennzeichnet,**
**daß** als Schaltmittel (1, 2, 3, 4) ein erster (1), ein zweiter (2), ein dritter (3) und ein vierter (4) Transistor vorgesehen sind, daß die Regelmittel (8) und der zweite Transistor (2) in das Gehäuse (14) des Motors (6) integriert sind, daß das Gehäuse (14) des Motors (6) drei Verbindungsklemmen (15, 16, 17) für externe Beschaltung aufweist und daß die Regelmittel (8) eine Schaltung (26) zur Temperaturkompensation und zur präzisen Drehzahlregelung des Motors (6) aufweisen.

2. Schaltungsanordnung nach Anspruch 1,
**dadurch gekennzeichnet,**
**daß** für den Betrieb in einer ersten Richtung ein erster elektrischer Anschluß (6a) des Motors mittels des ersten Transistors (1) mit einem Versorgungsspannungspotential und mittels des zweiten Transistors (2) mit dem Referenzpotentialeingang (8a) der Regelmittel (8) gekoppelt ist und ein zweiter elektrischer Motoranschluß (6b) mit einem Regeleingang (8b) der Regelmittel (8) gekoppelt ist, und daß für den Betrieb in einer zweiten Richtung der erste elektrische Anschluß (6a) mittels des dritten Transistors (3) mit einem Bezugspotential und der zweite elektrische Anschluß (6b) mittels des vierten Transistors (4) mit dem Versorgungsspannungspotential gekoppelt ist.

3. Schaltungsanordnung nach Anspruch 2,
**dadurch gekennzeichnet,**
**daß** der zweite elektrische Anschluß (6b) mit dem Regeleingang (8b) der Regelmittel (8) verbunden ist.

4. Schaltungsanordnung nach einem der Ansprüche 2 bis 3,
**dadurch gekennzeichnet,**
**daß** ein fünfter Transistor (5) vorgesehen ist, der einerseits mit einem Bezugspotentialeingang (8c) der Regelmittel (8) und mit dem zweiten Transistor (2) gekoppelt ist und andererseits mit dem Bezugspotential gekoppelt ist.

5. Schaltungsanordnung nach einem der Ansprüche 1 bis 4,
**dadurch gekennzeichnet,**
**daß** die Transistoren (1, 3, 4, 5) durch parallele Freilaufdioden (10, 11, 12) geschützt sind.

6. Schaltungsanordnung nach einem der Ansprüche 4 bis 5,
**dadurch gekennzeichnet,**
**daß** der erste (1), dritte (3), vierte (4) und fünfte (5) Transistor in eine integrierte Schaltung (20) integriert sind.

7. Laufwerk mit einer Schaltungsanordnung nach einem der Ansprüche 1 bis 6.

8. Magnetbandkassettengerät mit einer Schaltungsanordnung nach einem der Ansprüche 1 bis 6.

## Claims

1. A circuit arrangement for controlling a d.c. motor (6) which can be driven in two directions, which arrangement includes control means (8) having a reference potential input (8a) and a control input (8b), by means of which the speed of the motor (6) is controllable, and which includes switching means (1, 2, 3, 4) with the aid of which the control means (8) for the speed control of the motor (6) can be rendered operative for a first direction of rotation of the motor (6) and with the aid of which the control means (8) can be rendered inoperative for a second direction of rotation of the motor,
**characterized in that**
the switching means (1, 2, 3, 4) comprise a first (1), a second (2), a third (3) and a fourth (4) transistor, the control means (8) and the second transistor (2) are integrated in the housing (14) of the motor (6), the housing (14) of the motor (6) has three terminals (15, 16, 17) for external connections, and the control means (8) include a circuit (26) for temperature compensation and for the accurate speed control of the motor (6).

2. A circuit arrangement as claimed in claim 1,
**characterized in that**
a first electrical terminal (6a) of the motor is coupled to a supply voltage potential by means of the first transistor (1) and to the reference potential input (8a) of the control means (8) by means of the second transistor (2) and a second electrical terminal (6b) of the motor is coupled to a control input (8b) of the control means (8) for operation in a first direction, and the first electrical terminal (6a) is coupled to a further reference potential by means of the third transistor (3) and the second electrical terminal (6b) to the supply voltage potential by means of the fourth transistor (4) for operation in the second direction.

3. A circuit arrangement as claimed in claim 2,
**characterized in that**
the second electrical terminal (6b) is connected to the control input (8b) of the control means (8).

4. A circuit arrangement as claimed in any one of the Claims 2 to 3,
**characterized in that**
there has been provided a fifth transistor (5) which, on the hand, is coupled to a further reference potential input (8c) of the control means and to the second transistor (2) and, on the other hand, to the further reference potential.

5. A circuit arrangement as claimed in any one of the claims 1 to 4,
**characterized in that**
the transistors (1, 3, 4, 5) are protected by parallel freewheel diodes (10, 11, 12).

6. A circuit arrangement as claimed in any one of the claims 4 to 5,
**characterized in that**
the first (1), the third (3), the fourth (4) and the fifth (5) transistor are integrated in an integrated circuit (20).

7. A tape deck including a circuit arrangement as claimed in any one of the claims 1 to 6.

8. A magnetic-tape-cassette apparatus including a circuit arrangement as claimed in any one of the claims 1 to 6.

## Revendications

1. Circuit pour la commande d'un moteur à courant continu dans deux directions (6) qui présente des moyens de réglage (8) avec une entrée de potentiel de référence (8a) et une entrée de réglage (8b) à l'aide de laquelle la vitesse de rotation du moteur (6) est réglable et qui présente des moyens de commutation (1, 2, 3, 4) à l'aide desquels les moyens de réglage (8) en vue du réglage de la vitesse de rotation du moteur (6) peuvent être mis en circuit pour une première direction de marche du moteur (6) et à l'aide desquels les moyens de réglage (8) peuvent être mis hors circuit pour une deuxième direction de marche du moteur,
**caractérisé en ce**
**que** des premier (1), deuxième (2), troisième (3) et quatrième (4) transistors sont prévus comme moyens de commutation (1, 2, 3, 4), que les moyens de réglage (8) et le deuxième transistor (2) sont intégrés dans le carter (14) du moteur (6), que le carter (14) du moteur (6) présente trois bornes de liaison (15, 16, 17) pour un montage externe et que les moyens de réglage (8) présentent un circuit (26) pour la compensation de la température et le réglage précis de la vitesse de rotation du moteur (6).

2. Circuit selon la revendication 1,
**caractérisé en ce**
**que**, pour le fonctionnement dans une première direction, une première connexion électrique (6a) du moteur est couplée à l'aide du premier transistor (1) à un potentiel de tension d'alimentation et à l'aide du deuxième transistor (2) à l'entrée du potentiel de référence (8a) des moyens de réglage (8) et une deuxième connexion de moteur électrique (6b) est couplée à une entrée de réglage (8b) des moyens de réglage (8) et que, pour le fonctionnement dans une deuxième direction, la première connexion électrique (6a) est couplée à l'aide du troisième transistor (3) à un potentiel de référence et la deuxième connexion électrique (6b) est couplée à l'aide du quatrième transistor (4) au potentiel de la tension d'alimentation.

3. Circuit selon la revendication 2,
**caractérisé en ce**
**que** la deuxième connexion électrique (6b) est reliée à l'entrée de réglage (8b) des moyens de réglage (8).

4. Circuit selon l'une des revendications 2 à 3,
**caractérisé en ce**
**qu'**il est prévu un cinquième transistor qui est couplé, d'une part, à une entrée de potentiel de référence (8c) des moyens de réglage (8) et au deuxième transistor (2) et, d'autre part, est couplé au potentiel de référence.

5. Circuit selon l'une des revendications 1 à 4,
**caractérisé en ce**
**que** les transistors (1, 3, 4, 5) sont protégés par des diodes de roue libre (10, 11, 12).

6. Circuit selon l'une des revendications 4 à 5,
**caractérisé en ce**
**que** les premier (1), deuxième (2), troisième (3) et quatrième (4) transistors sont intégrés dans un circuit intégré.

7. Mécanisme d'entraînement avec un circuit selon l'une des revendications 1 à 6.

8. Magnétophone à cassette avec un circuit selon l'une des revendications 1 à 6.
